# FASCICULE DE BREVET EUROPEEN

(11) **EP 0 993 398 B1**
(45) Date de publication et mention de la délivrance du brevet: **30.05.2001**
(21) Numéro de dépôt: 98933700.1
(22) Date de dépôt: 24.06.1998
(51) Int. Cl.: B60T 13/565, B60T 13/573

(54) **MAITRE-CYLINDRE PERFECTIONNE A REACTION HYDRAULIQUE DYNAMIQUEMENT ANNULABLE**
VERBESSERTER HAUPTZYLINDER MIT DYNAMISCH ANNULIERBARER HYDRAULISCHER REAKTION
IMPROVED MASTER CYLINDER WITH HYDRAULIC REACTION CAPABLE OF BEING CANCELLED

(30) Priorité: 27.06.1997 FR 9708122; 30.01.1998 FR 9801094
(43) Date de publication de la demande: 19.04.2000
(73) Titulaire: Bosch Systemes de Freinage, 93700 Drancy (FR)
(72) Inventeur: VERBO, Ulysse, F-93600 Aulnay-sous-Bois (FR); LEBOISNE, Cédric, F-75012 Paris (FR); ATTARD, Jean-Marc, F-60500 Chantilly (FR)
(86) Numéro de dépôt international: FR9801328
(87) Numéro de publication internationale: WO9900283

(56) Documents cités:
- WO-A-96/07572
- DE-A- 4 101 480
- FR-A- 2 696 142

## Description

La présente invention concerne un maître-cylindre à réaction hydraulique pour servomoteur pneumatique d'assistance au freinage, comprenant : un corps percé d'un alésage principal; un piston principal cylindrique, percé d'un alésage secondaire, et dont une extrémité externe au corps est susceptible de recevoir une force d'assistance orientée suivant une première direction, ce piston principal étant monté à coulissement étanche dans l'alésage principal pour y délimiter une chambre de travail soumise en fonctionnement à une pression hydraulique; et un piston de réaction dont une première extrémité externe au corps est susceptible de recevoir une force d'actionnement orientée suivant la première direction, et dont une seconde extrémité est montée à coulissement étanche dans l'alésage secondaire pour y délimiter une chambre de réaction qui communique avec la chambre de travail, le piston de réaction étant susceptible de se déplacer, par rapport au piston principal, sur une course d'amplitude minimale non nulle pour un gradient de la force d'actionnement supérieur à un seuil déterminé.

Un maître-cylindre de ce type est par exemple décrit dans le brevet FR - 2 724 354.

Des dispositifs de ce type ont été développés de façon très récente pour leur aptitude à pallier les défauts dynamiques des servomoteurs pneumatiques d'assistance au freinage.

On sait en effet que les servomoteurs pneumatiques d'assistance au freinage, qui sont utilisés pour fournir une force d'assistance de freinage s'ajoutant à la force d'actionnement exercée par le conducteur sur la pédale de frein et en théorie proportionnelle à cette dernière, présentent le défaut de ne pouvoir développer cette force d'assistance qu'après une certain retard par rapport à la force d'actionnement.

Comme la force d'assistance résulte d'une différence entre les pressions pneumatiques régnant respectivement dans une chambre avant du servomoteur, reliée à une source de dépression, et dans une chambre arrière, reliée à l'atmosphère lors du freinage, et comme le retard de la force d'assistance sur la force d'actionnement est dû à une limitation du débit de l'air atmosphérique admis dans la chambre arrière à travers le clapet d'entrée du servomoteur au moment du freinage, ce retard est d'autant plus important que le freinage est brusque.

Or, les situations dans lesquelles le freinage est rapide sont en général des situations d'urgence, dans lesquelles le conducteur aurait au contraire précisément besoin, le plus tôt possible, de la plus grande force d'assistance possible.

Ces considérations ont conduit, tout récemment, au développement de maîtres-cylindres à réaction hydraulique autorisant d'une part une plus grande amplitude d'ouverture du clapet d'entrée du servomoteur, donc un débit d'air accru, et d'autre part une modulation dynamique de la force de réaction, c'est-à-dire une modulation, en fonction de la vitesse de freinage, de la fraction de la force d'assistance que le maître-cylindre à réaction oppose à la force d'actionnement pour ajuster la force d'assistance en fonction de cette force d'actionnement.

Grâce à des dispositifs décrits dans des documents non pré-publiés, il est ainsi possible de réduire considérablement la force de réaction en cas de freinage d'urgence par rapport à la valeur qu'elle présente en cas de freinage normal, ce qui permet corrélativement d'augmenter la force de freinage disponible dans les situations de freinage d'urgence.

Cependant, un problème encore rencontré dans le développement de ces dispositifs est la difficulté d'annuler la force de réaction en cas de freinage violent.

La présente invention a pour but de proposer une solution à ce problème.

A cette fin, le maître-cylindre de l'invention, par ailleurs conforme au préambule ci-dessus, est essentiellement caractérisé en ce qu'il comprend en outre : un premier siège d'obturation formé sur une face frontale de la seconde extrémité du piston de réaction, destiné à venir coopérer avec un second siège d'obturation monté à une première extrémité d'un support de siège disposé dans la chambre de réaction, à une distance du premier siège d'obturation au plus égale à la course d'amplitude minimale; et au moins un premier ressort sollicitant le piston de réaction dans un sens propre à écarter le premier siège d'obturation du second siège d'obturation.

Dans un mode de réalisation possible de l'invention, l'alésage secondaire est étagé, et le piston de réaction comprend un élément poussoir, un élément annulaire entourant l'élément poussoir, et un élément tubulaire faisant suite à l'élément poussoir suivant la première direction, le premier siège d'obturation étant alors formé sur l'élément tubulaire.

Il est par ailleurs possible de faire en sorte que la courbe de réponse du servomoteur équipé du maître-cylindre de l'invention présente, comme c'est classiquement le cas, un saut initial, en prévoyant que ce maître-cylindre à réaction hydraulique comprenne un second ressort sollicitant une bague mobile suivant la première direction contre un appui interne de l'alésage secondaire, et que le piston de réaction présente des moyens pour entraîner la bague mobile lorsqu'il est déplacé, à partir d'une position de repos, suivant une direction inverse de la première direction.

Le support de siège peut quant à lui être solidaire du piston principal ou être mobile par rapport au piston principal.

Dans ce dernier cas, le support de siège peut être monté de manière que sa seconde extrémité coulisse de façon étanche dans le piston principal, ce support de siège étant, par sa première extrémité, soumis à une pression régnant dans la chambre de réaction, et, par sa seconde extrémité, soumis à une pression inférieure à la pression régnant dans la chambre de réaction.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue globale en coupe d'un servomoteur incorporant le maître-cylindre de l'invention;
- la figure 2 est une vue en coupe agrandie de la partie du maître-cylindre dans laquelle se concentrent les caractéristiques avantageuses de l'invention, pour un premier mode de réalisation de cette dernière;
- la figure 3 est une vue en coupe agrandie de la partie du maître-cylindre dans laquelle se concentrent les caractéristiques avantageuses de l'invention, pour un second mode de réalisation de cette dernière; et
- la figure 4 est une vue en coupe se distinguant de la figure 2 par une variante d'exécution du support de siège, également utilisable dans le cadre du second mode de réalisation illustré à la figure 3.

Comme indiqué précédemment, l'invention concerne un maître-cylindre à réaction hydraulique 1 destiné à équiper un servomoteur pneumatique d'assistance au freinage 2.

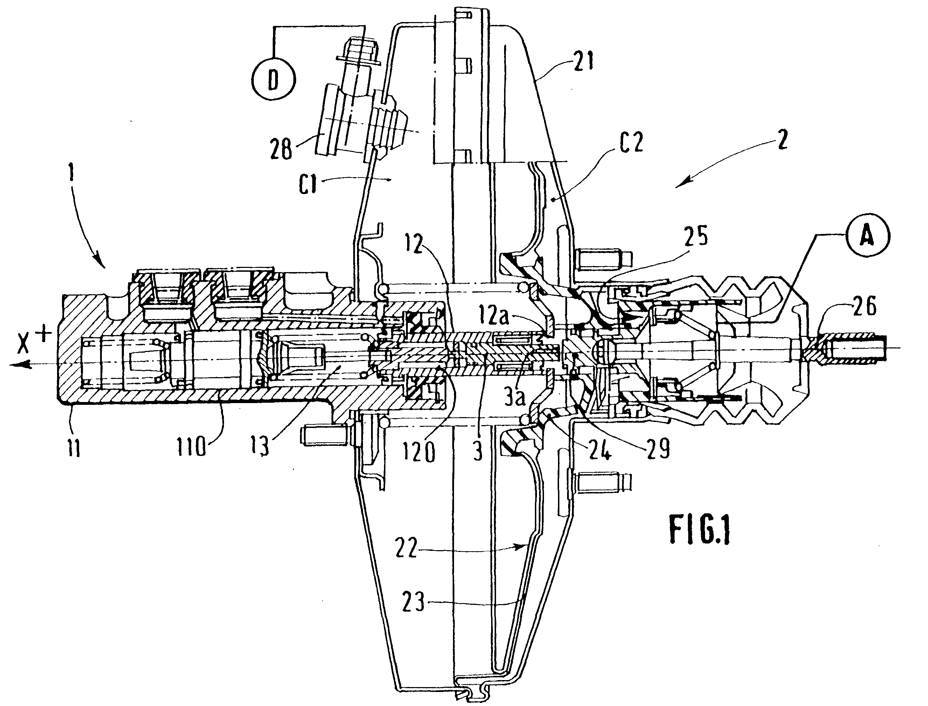

De façon connue en soi, le servomoteur pneumatique d'assistance comprend (figure 1) une enveloppe rigide 21, une cloison mobile 22 comportant une jupe rigide 23, un piston pneumatique 24, un clapet à trois voies 25, et une tige de commande 26 actionnée par une pédale de frein (non représentée).

La cloison mobile 22 sépare de façon étanche le volume intérieur de l'enveloppe rigide 21 en deux chambres pneumatiques C1 et C2, de volumes complémentaires et variables.

La première chambre, ou chambre avant C1, est reliée à une source de basse pression D par l'intermédiaire d'une valve anti-retour 28, et la seconde chambre, ou chambre arrière C2, est susceptible d'être sélectivement reliée, au moyen du clapet à trois voies 25, soit à la source de basse pression D, soit à une source de pression relativement haute A, par exemple l'atmosphère.

Grâce à cet agencement connu en soi, l'actionnement du clapet à trois voies 25, qui permet de relier la chambre arrière C2 à la seconde source A, provoque une différence de pression entre les chambres avant et arrière C1 et C2, la cloison mobile 22 se trouvant ainsi sollicitée par une force qui représente la force d'assistance du servomoteur, et se déplaçant à l'intérieur de l'enveloppe 21.

En pratique, le clapet à trois voies 25 est porté par le piston 24 et son ouverture sur la chambre arrière est commandée par l'application d'une force d'actionnement suivant la direction axiale X+ sur la tige de commande 26, cette tige étant elle-même portée par le piston 24 et se terminant par un palpeur 29.

Le maître-cylindre 1 est disposé dans le prolongement de la tige de commande 26 et comprend essentiellement un corps 11 duquel font saillie un piston principal 12 et un piston de réaction 3, ce piston de réaction faisant partie de moyens de réaction hydraulique qui seront détaillés ultérieurement et qui font plus spécifiquement l'objet de l'invention.

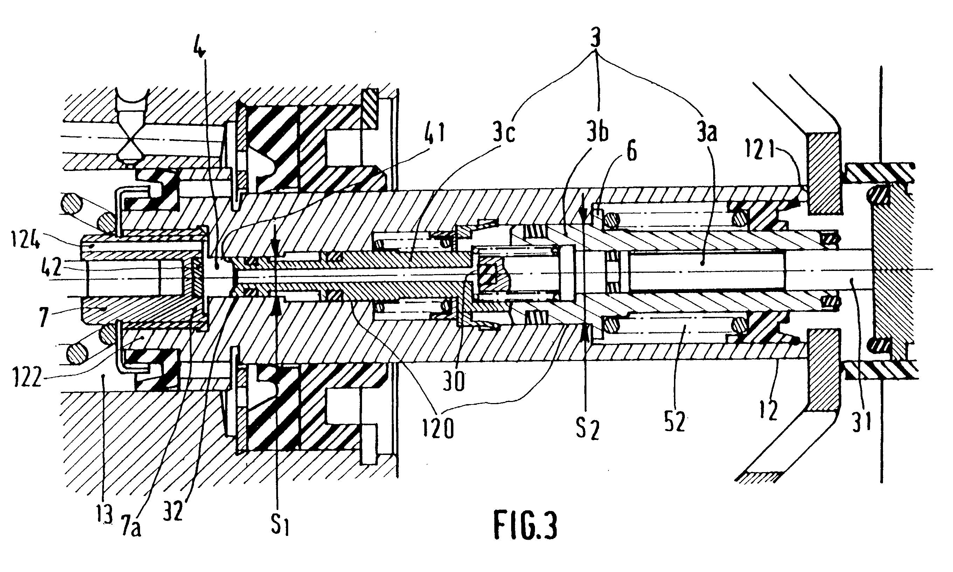

Le corps 11 est percé d'un alésage principal 110, dans lequel le piston principal 12, de forme cylindrique et percé d'un alésage secondaire 120 éventuellement étagé (voir figure 3), est monté coulissant de façon étanche pour y délimiter une chambre de travail 13 soumise en fonctionnement à une pression hydraulique.

L'extrémité 121 du piston principal 12, qui se trouve à l'extérieur du corps 11, offre un appui au piston pneumatique 24, de manière à recevoir la force d'assistance transmise à ce piston pneumatique 24 par la cloison mobile 22 dans son ensemble, et orientée suivant la direction axiale X+.

De façon similaire, une première extrémité 31 du piston de réaction 3, qui se trouve à l'extérieur du corps 11, offre un appui au palpeur 29 pour recevoir la force d'actionnement exercée par le conducteur suivant la direction axiale X+ et transmise par la tige de commande 26.

L'autre extrémité 32 du piston de réaction 3 est montée à coulissement étanche dans l'alésage secondaire 120 pour y délimiter une chambre de réaction 4 qui communique avec la chambre de travail 13, par exemple à travers des canaux tels que 124.

Compte tenu du retard avec lequel la force d'assistance se développe par rapport à la force d'actionnement en cas de freinage brusque, le piston de réaction 3 est susceptible de se déplacer, par rapport au piston principal 12, sur une course d'amplitude minimale K lorsque la variation temporelle de la force d'actionnement dépasse un seuil prédéterminé, à partir duquel le freinage peut être considéré comme un freinage d'urgence.

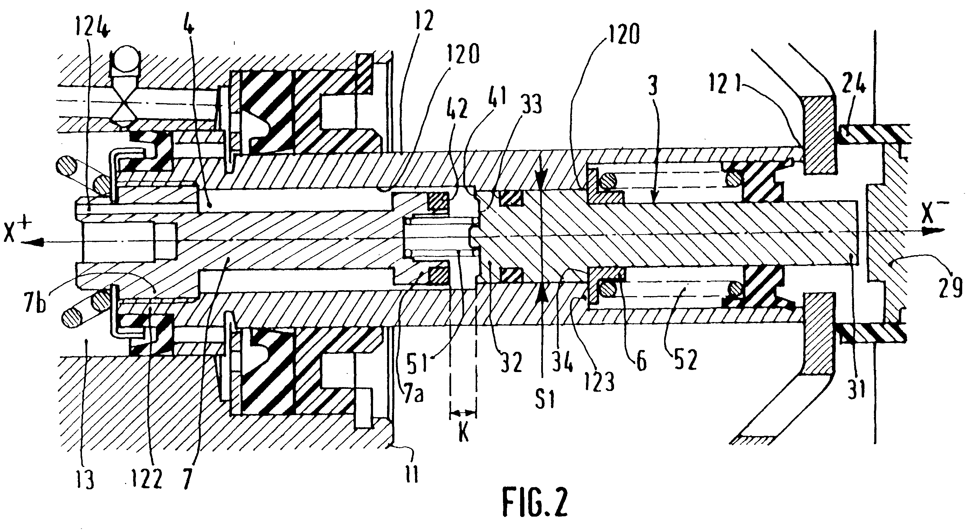

Les moyens de réaction hydraulique qui font plus particulièrement l'objet de l'invention (figures 2 à 4) comprennent essentiellement, outre le piston de réaction 3, un premier siège d'obturation 41, un second siège d'obturation 42, et au moins un premier ressort 51.

Le premier siège d'obturation 41, qui est formé sur une face frontale 33 de la seconde extrémité 32 du piston de réaction 3, est destiné à venir coopérer avec le second siège d'obturation 42, qui est monté à une première extrémité 7a d'un support de siège 7 disposé dans la chambre de réaction 4.

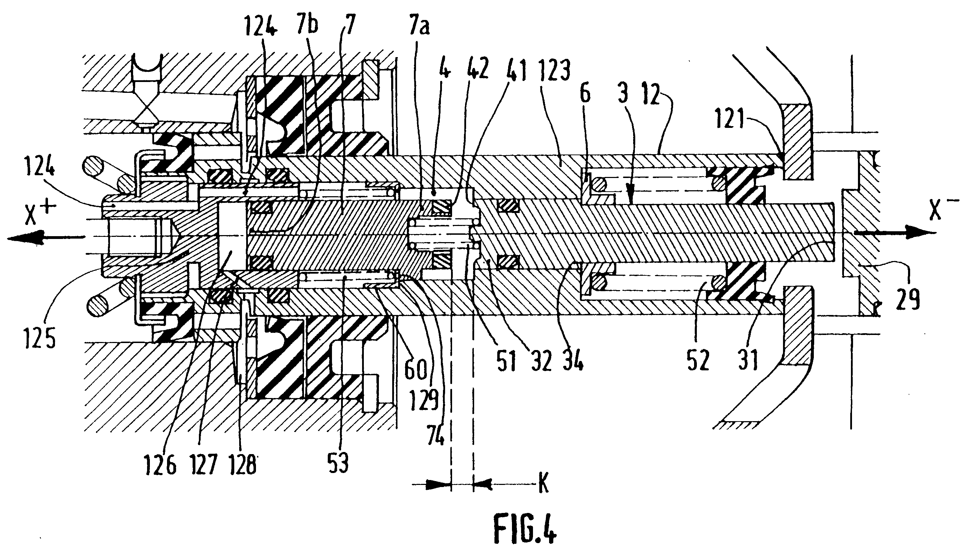

Le support de siège 7 peut par exemple être formé par une pièce rendue axialement solidaire par vissage de la seconde extrémité 122 du piston principal 12 et portant les canaux 124, comme le montrent les figures 2 et 3, ou coulisser de façon étanche dans le piston principal 12, comme le montre la figure 4.

Dans tous les cas, la distance maximale séparant le premier siège d'obturation 41 du second siège d'obturation 42, c'est-à-dire en pratique la distance qui sépare ces deux sièges dans la position de repos du maître-cylindre, telle que représentée aux figures 2, 3, et 4, est au plus égale à la course K, de manière à permettre au premier siège 41 de venir s'appliquer sur le second siège 42 en cas de freinage d'urgence.

Le premier ressort 51, qui a pour fonction de solliciter le piston de réaction 3 dans un sens propre à écarter le premier siège d'obturation 41 du second siège d'obturation 42, est par exemple un ressort travaillant en compression et installé entre le support de siège 7 et le piston de réaction 3.

Il peut en outre être avantageux, pour reproduire la sensation connue de pédale de frein, de prévoir un second ressort 52 sollicitant une bague mobile 6 suivant la direction X+ contre un appui interne 123 de l'alésage secondaire, le piston de réaction 3 comportant des moyens, tels qu'un épaulement 34, pour entraîner la bague mobile 6 lorsqu'il est déplacé, à partir de sa position de repos représentée aux figures 2, 3, et 4, suivant une direction X- inverse de la direction d'actionnement X+.

Le fonctionnement du maître-cylindre de l'invention, décrit en référence aux figures 1 et 2, est le suivant.

En cas d'application sur la tige de commande 26 d'une force d'actionnement variant de façon relativement lente, l'enfoncement du palpeur 29 provoque l'ouverture du clapet 25, donc l'admission d'air atmosphérique dans la chambre arrière C2, avant que le piston de réaction 3 ait pu venir appliquer le siège d'obturation 41 sur le second siège 42.

Dans ces conditions, la cloison mobile 22 exerce sur l'extrémité 121 du piston principal 12 une force d'assistance qui déplace le piston principal dans la direction X+ et qui s'oppose à tout mouvement relatif du piston de réaction 3 par rapport au piston principal 12 suivant la direction X+, donc interdit le contact des sièges 41 et 42.

Dans ce mode de fonctionnement, la pression hydraulique, qui règne dans la chambre de travail 13 et dans la chambre de réaction 4, et qui s'exerce donc sur toute la section S1 de l'extrémité 32 du piston de réaction 3, finit par repousser le piston de réaction 3 et la bague 6 en comprimant le ressort 52, et fait ainsi apparaître sur le palpeur 29 une force de réaction dont l'intensité est celle des forces de réaction classiquement mises en oeuvre dans les servomoteurs connus.

En cas d'application sur la tige de commande 26 d'une force d'actionnement variant de façon relativement rapide, le piston de réaction 3 permet en revanche au premier siège d'obturation 41 de venir s'appliquer sur le second siège 42 avant que l'air atmosphérique ne puisse être admis dans la chambre arrière C2 en quantité suffisante pour que la cloison mobile 22 exerce sur l'extrémité 121 du piston principal 12 une force d'assistance capable de déplacer le piston principal dans la direction X+ et de rattraper le mouvement du piston de réaction 3.

Or, comme le premier siège 41 est alors appliqué sur le second siège 42, et comme la section de recouvrement mutuel de ces deux sièges est par définition égale à la section S1 de l'extrémité 32 du piston de réaction 3, la pression hydraulique régnant dans la chambre de travail 13 et dans la chambre de réaction 4 cesse, dans ce mode de fonctionnement, de pouvoir exercer quelque force de réaction que ce soit sur le piston de réaction 3.

Il est donc ainsi possible, grâce à l'invention, d'annuler ou pratiquement annuler la force de réaction qui s'oppose à la force d'actionnement exercée sur le piston de réaction 3 en cas d'application rapide de cette force d'actionnement, donc d'augmenter la force d'actionnement disponible dans les situations de freinage d'urgence.

La figure 3 illustre ce même concept inventif dans le cas de l'utilisation d'un piston de réaction plus complexe, autorisant déjà, en lui-même, deux modes différents de réaction hydraulique, ces deux modes étant néanmoins externes à l'objet spécifique de la présente invention.

Dans ce cas, l'alésage secondaire 120 du piston principal 12 est étagé et le piston de réaction 3 comprend notamment un élément poussoir 3a, un élément annulaire 3b entourant l'élément poussoir, et un élément tubulaire étagé 3c disposé au-delà de l'élément poussoir 3a par rapport à la première direction X+.

Un tel piston de réaction peut, par construction, permettre soit l'apparition d'une force de réaction s'appliquant sur la section cumulée S2 de l'élément poussoir 3a et de l'élément annulaire 3b, auquel la bague 6 peut être intégrée, soit, par fermeture d'un clapet hydraulique 30 disposé entre l'élément poussoir 3a et l'élément tubulaire 3c, l'apparition d'une force de réaction s'appliquant seulement sur la section S1 de l'extrémité 32 du piston de réaction 3.

L'application du concept inventif à cet arrangement, conduisant donc à prévoir le premier siège d'obturation 41 sur l'élément tubulaire 3c et un second siège 42 semblable à celui du premier mode de réalisation illustré à la figure 2 ou à celui de la variante illustrée à la figure 4, permet ainsi d'annuler, dans ce second mode de réalisation également, la force de réaction en cas de freinage d'urgence.

Comme il est dit précédemment, la figure 4 illustre une variante d'exécution du support de siège 7.

Selon cette variante, le support de siège 7, dont la première extrémité 7a porte le second siège d'obturation 42, est monté coulissant de façon étanche, par sa seconde extrémité 7b, dans le piston principal 12, par exemple dans un embout fixe 125 de ce piston 12, qui est traversé par les canaux 124.

Le support de siège 7 définit ainsi, dans le piston principal 12, une chambre 126 qui est mise en communication, par un conduit 127, avec un espace annulaire 128 soumis à la pression atmosphérique.

Grâce à ces caractéristiques, le support de siège 7 est, par sa première extrémité 7a, soumis à la pression qui règne dans la chambre de réaction 4, alors qu'il n'est soumis, par sa seconde extrémité 7b, qu'à la pression atmosphérique, c'est-à-dire à une pression sensiblement constante, inférieure à la pression régnant dans la chambre de réaction 4, et en pratique négligeable par rapport à celle-ci.

Un troisième ressort précontraint 53, qui sollicite, suivant la direction inverse X-, une seconde bague mobile 60 coopèrant avec un épaulement 74 du support de siège 7 et avec une butée 129 du piston principal 12, est de préférence prévu pour placer le second siège d'obturation 42 à la distance K du premier siège d'obturation 41 dans l'état de repos du maître-cylindre.

Dans ces conditions, non seulement un actionnement rapide du maître-cylindre permet, par contact mutuel des sièges d'obturation 41 et 42, d'annuler la réaction hydraulique qui s'oppose, en régime lent, au mouvement qu'effectue le piston de réaction 3 suivant la direction X+, mais la mobilité du support de siège 7 suivant la direction X+ autorise même un mouvement supplémentaire du piston de réaction 3 par rapport au piston principal 12 après la rencontre des sièges d'obturation 41 et 42, contrairement à ce qui est la cas lorsque le support de siège est solidaire du piston principal 12.

Ainsi, la variante d'exécution du support de siège 7 de la figure 4, qui est utilisable aussi bien avec un piston de réaction tel qu'illustré sur cette figure qu'avec un piston de réaction tel qu'illustré à la figure 3, permet une plus grande ouverture du clapet 25 du servomoteur, donc une réduction supplémentaire du temps de réponse de ce dernier.

## Revendications

1. Maître-cylindre à réaction hydraulique pour servomoteur pneumatique d'assistance au freinage, comprenant :
un corps (11) percé d'un alésage principal (110);
un piston principal (12) cylindrique, percé d'un alésage secondaire (120), et dont une extrémité (121) externe au corps est susceptible de recevoir une force d'assistance orientée suivant une première direction (X+), ce piston principal étant monté à coulissement étanche dans l'alésage principal pour y délimiter une chambre de travail (13) soumise en fonctionnement à une pression hydraulique; et
un piston de réaction (3) dont une première extrémité (31) externe au corps est susceptible de recevoir une force d'actionnement orientée suivant la première direction (X+), et dont une seconde extrémité (32) est montée à coulissement étanche dans l'alésage secondaire (120) pour y délimiter une chambre de réaction (4) qui communique avec la chambre de travail (13), le piston de réaction (3) étant susceptible de se déplacer, par rapport au piston principal (12), sur une course (K) d'amplitude minimale non nulle pour un gradient de la force d'actionnement supérieur à un seuil déterminé;
caractérisé en ce qu'il comprend en outre : un premier siège d'obturation (41) formé sur une face frontale (33) de la seconde extrémité (32) du piston de réaction (3), destiné à venir coopérer avec un second siège d'obturation (42) monté à une première extrémité (7a) d'un support de siège (7) disposé dans la chambre de réaction (4), à une distance du premier siège d'obturation (41) au plus égale à ladite course d'amplitude minimale; et au moins un premier ressort (51) sollicitant le piston de réaction (3) dans un sens propre à écarter le premier siège d'obturation (41) du second siège d'obturation (42).

2. Maître-cylindre à réaction hydraulique suivant la revendication 1, caractérisé en ce que le support de siège (7) est solidaire du piston principal (12).

3. Maître-cylindre à réaction hydraulique suivant la revendication 1, caractérisé en ce que le support de siège (7) présente une seconde extrémité coulissant de façon étanche dans le piston principal (12), ce support de siège étant, par sa première extrémité (7a), soumis à une pression régnant dans la chambre de réaction (4), et, par sa seconde extrémité (7b), soumis à une pression inférieure à la pression régnant dans la chambre de réaction (4).

4. Maître-cylindre à réaction hydraulique suivant l'une quelconque des revendications 2 et 3, caractérisé en ce que l'alésage secondaire (120) est étagé et en ce que le piston de réaction (3) comprend un élément poussoir (3a), un élément annulaire (3b) entourant l'élément poussoir, et un élément tubulaire (3c) faisant suite à l'élément poussoir suivant la première direction (X+), le premier siège d'obturation (41) étant alors formé sur l'élément tubulaire.

5. Maître-cylindre à réaction hydraulique suivant l'une quelconque des revendications 2 à 4, caractérisé en ce qu'il comprend un second ressort (52) sollicitant une bague mobile (6) suivant la première direction (X+) contre un appui interne (123) de l'alésage secondaire, et en ce que le piston de réaction (3, 3b) comporte des moyens (34) pour entraîner la bague mobile (6) lorsqu'il est déplacé, à partir d'une position de repos, suivant une seconde direction (X-) inverse de la première direction (X+).

6. Maître-cylindre à réaction hydraulique suivant la revendication 3, caractérisé en ce qu'il comprend un troisième ressort précontraint (53) qui sollicite, suivant une seconde direction (X-) inverse de la première direction (X+), une seconde bague mobile (60) coopèrant avec un épaulement (74) du support de siège (7) et avec une butée (129) du piston principal (12), pour placer, au repos, le second siège d'obturation (42) à distance du premier siège d'obturation (41).

## Claims

1. Master cylinder with hydraulic reaction for a pneumatic brake booster, comprising:
a body (11) pierced with a main bore (110);
a cylindrical main piston (12) pierced with a secondary bore (120), and of which one end (121), outside the body, can receive a boost force directed in a first direction (X+), this main piston being mounted so that it can slide, without leaking, in the main bore in order therein to delimit a working chamber (13) which during operation is subject to a hydraulic pressure; and
a reaction piston (3) of which a first end (31), outside the body, is capable of receiving an actuating force directed in the first direction (X+) and of which a second end (32) is mounted so that it can slide without leaking in the secondary bore (120) in order therein to delimit a reaction chamber (4) that communicates with the working chamber (13), the reaction piston (3) being capable of moving, with respect to the main piston (12), through a travel (K) with a non-zero minimum amplitude for an actuation force gradient that exceeds a given threshold;
characterized in that it further comprises: a first shut-off seat (41) formed on a front face (33) of the second end (32) of the reaction piston (3), intended to cooperate with a second shut-off seat (42) mounted at a first end (7a) of a seat support (7) arranged in the reaction chamber (4), at a distance from the first shut-off seat (41) that is at most equal to said travel of minimum amplitude; and at least a first spring (51) urging the reaction piston (3) in a direction likely to move the first shut-off seat (41) away from the second shut-off seat (42).

2. Master cylinder with hydraulic reaction according to Claim 1, characterized in that the seat support (7) is integral with the main piston (12).

3. Master cylinder with hydraulic reaction according to Claim 1, characterized in that the seat support (7) has a second end sliding in leaktight fashion in the main piston (12), this seat support being subjected, via its first end (7a) to a pressure prevailing in the reaction chamber (4) and, via its second end (7b) subjected to a pressure lower than the pressure prevailing in the reaction chamber (4).

4. Master cylinder with hydraulic reaction according to either one of Claims 2 and 3,
characterized in that the secondary bore (120) is stepped and in that the reaction piston (3) comprises a push-rod element (3a), an annular element (3b) surrounding the push-rod element, and a tubular element (3c) following on from the push-rod element in the first direction (X+), the first shut-off seat (41) then being formed on the tubular element.

5. Master cylinder with hydraulic reaction according to any one of Claims 2 to 4, characterized in that it comprises a second spring (52) urging a moving ring (6) in the first direction (X+) against an internal rest (123) in the secondary bore, and in that the reaction piston (3, 3b) comprises means (34) for carrying along the moving ring (6), when this piston is moved, from a position of rest in a second direction (X-) which is the opposite direction to the first direction (X+).

6. Master cylinder with hydraulic reaction according to Claim 3, characterized in that it comprises a third preloaded spring (53) which urges, in a second direction (X-) which is the opposite of the first direction (X+) a second moving ring (60) interacting with a shoulder (74) of the seat support (7) and with a stop (129) of the main piston (12), so as to place, at rest, the second shut-off seat (42) some distance away from the first shut-off seat (41).

## Patentansprüche

1. Hauptzylinder mit hydraulischer Reaktion für pneumatischen Servomotor zur Bremsunterstützung, umfassend:
- einen Körper (11), der mit einer Hauptbohrung (110) versehen ist,
- einen zylindrischen Hauptkolben (12), der mit einer Nebenbohrung (120) versehen ist und dessen außerhalb des Körpers befindliches Ende (121) eine Bremsunterstützungskraft aufnehmen kann, die in eine erste Richtung (X+) gerichtet ist, wobei dieser Hauptkolben in dichter Weise gleitbeweglich in der Hauptbohrung gelagert ist, um darin eine Arbeitskammer (13) abzugrenzen, die im Betrieb einem Hydraulikdruck unterliegt, und
- einen Reaktionskolben (3), dessen erstes Ende (31), das sich außerhalb des Körpers befindet, eine Betätigungskraft aufnehmen kann, die in die erste Richtung (X+) gerichtet ist, und dessen zweites Ende (32) in dichter Weise gleitbeweglich in der Nebenbohrung (120) gelagert ist, um darin eine Reaktionskammer (4) abzugrenzen, die mit der Arbeitskammer (13) in Verbindung steht, wobei der Reaktionskolben (3) bezüglich des Hauptkolbens (12) um einen Hub (K) mit minimaler Größe ungleich null bei einem über einem vorbestimmten Schwellwert liegenden Gradienten der Betätigungskraft verschiebbar ist,
dadurch gekennzeichnet, daß er ferner enthält: einen ersten Schließsitz (41), der an einer Stirnseite (33) des zweiten Endes (32) des Reaktionskolbens (3) gebildet ist, der dazu bestimmt ist, mit einem zweiten Schließsitz (42) zusammenzuwirken, welcher an einem ersten Ende (7a) eines Sitzträgers (7) angebracht ist, der in der Reaktionskammer (4) angeordnet ist, und zwar in einem Abstand vom ersten Schließsitz (41), der höchstens gleich dem genannten Hub minimaler Größe ist, und zumindest eine erste Feder (51), die den Reaktionskolben (3) in einer solchen Richtung beaufschlagt, daß der erste Schließsitz (41) vom zweiten Schließsitz (42) entfernt werden kann.

2. Hauptzylinder mit hydraulischer Reaktion nach Anspruch 1, dadurch gekennzeichnet, daß der Sitzträger (7) fest mit dem Hauptkolben (12) verbunden ist.

3. Hauptzylinder mit hydraulischer Reaktion nach Anspruch 1, dadurch gekennzeichnet, daß der Sitzträger (7) ein zweites Ende aufweist, das in dichter Weise im Hauptkolben (12) gleitet, wobei dieser Sitzträger mit seinem ersten Ende (7a) einem Druck ausgesetzt ist, der in der Reaktionskammer (4) herrscht, und mit seinem zweiten Ende (7b) einem Druck unterliegt, der kleiner ist als der in der Reaktionskammer (4) herrschende Druck.

4. Hauptzylinder mit hydraulischer Reaktion nach einem der Ansprüche 2 und 3, dadurch gekennzeichnet, daß die Nebenbohrung (120) gestuft ist und daß der Reaktionskolben (3) ein Stößelteil (3a), ein das Stößelteil umgebendes Ringteil (3b) und ein rohrförmiges Teil (3c) enthält, das dem Stößelteil in der ersten Richtung (X+) folgt, wobei der erste Schließsitz (41) dann am rohrförmigen Teil gebildet ist.

5. Hauptzylinder mit hydraulischer Reaktion nach einem der Ansprüche 2 bis 4, dadurch gekennzeichnet, daß er eine zweite Feder (52) enthält, die einen beweglichen Ring (6) in die erste Richtung (X+) gegen eine innere Abstützung (123) der Nebenbohrung beaufschlagt, und daß der Reaktionskolben (3, 3b) Mittel (34) enthält, die den beweglichen Ring (6) dann, wenn er von einer Ruhestellung in einer zweiten Richtung (X-) verschoben wird, die zur ersten Richtung (X+) entgegengesetzt ist, mitnehmen.

6. Hauptzylinder mit hydraulischer Reaktion nach Anspruch 3, dadurch gekennzeichnet, daß er eine vorgespannte dritte Feder (53) enthält, die einen zweiten beweglichen Ring (60) in einer zur ersten Richtung (X+) entgegengesetzt verlaufenden zweiten Richtung (X-) beaufschlagt, der mit einer Schulter (74) des Sitzträgers (7) und mit einem Anschlag (129) des Hauptkolbens (12) zusammenwirkt, um in der Ruhestellung den zweiten Schließsitz (42) in einen Abstand vom ersten Schließsitz (41) zu bringen.
